Europäisches Patentamt

European Patent Office

Office européen des brevets

(11) Publication number: **0 064 578**
**B1**

(12) **EUROPEAN PATENT SPECIFICATION**

(45) Date of publication of patent specification: **27.03.85**

(51) Int. Cl.⁴: **B 23 B 31/04, B 23 B 31/12**

(21) Application number: **81302040.1**

(22) Date of filing: **08.05.81**

(54) **Self-adjusting chucks.**

(43) Date of publication of application:
**17.11.82 Bulletin 82/46**

(45) Publication of the grant of the patent:
**27.03.85 Bulletin 85/13**

(84) Designated Contracting States:
**AT CH DE FR IT LI**

(56) References cited:
**DD-U- 9 510**
**FR-A- 681 717**
**GB-A- 309 858**
**GB-A- 465 128**
**US-A-2 459 899**
**US-A-2 650 523**
**US-A-2 670 215**

(73) Proprietor: **Walton, Jean**
**69 South Hill Park**
**London N.W.3 (GB)**

(72) Inventor: **Walton, Jean**
**69 South Hill Park**
**London N.W.3 (GB)**

(74) Representative: **Jones, Graham H.**
**Graham Jones & Company 77 Beaconsfield**
**Road Blackheath**
**London SE3 7LG (GB)**

Courier Press, Leamington Spa, England.

## Description

This invention relates to self-adjusting chucks, whether for hand-held tools or machine tools.

Time taken in changing "bits" due to adjusting and tightening chucks, on hand-held power tools in particular, can be compounded with lost chuck keys and even injury if the drill or tool is accidentally started before the chuck key is removed.

Keyless chucks are known but they suffer from an anomaly in that either they cannot be tightened sufficiently by hand or they take a longer time to be adjusted than a chuck employing a chuck key.

In the case of known chucks there is often a need to re-tighten the chuck during use due to the work-torque which is applied to the jaws causing vibrations to be transmitted directly to the jaw-clamping threads, resulting in the chuck loosening.

The term "bit" is intended to include other tools besides drill bits which are required to be held in a chuck.

In French Patent Specification No. 681717 there is shown a chuck comprising a body, jaws which are adjustable for enabling insertion of a bit, and clamping means for applying a pressure to the jaws such that in use the jaws clamp against the inserted bit and retain it in the chuck.

In accordance with the present invention there is provided a chuck comprising a body, jaws which are adjustable for enabling insertion of a bit and clamping means for applying pressure to the jaws such that in use the jaws clamp against the inserted bit and retain it in the chuck the chuck being characterised in that the clamping means comprises a movable member, a clamping device for moving the movable member towards the jaws and for causing a pressure to be applied to the jaws when the jaws are in their bit-clamping position, wherein the chuck includes track means for causing a constant dimension to be maintained between a surface which moves in the process of adjusting the jaws and a surface on the movable member so that movement of the clamping device for clamping the jaws on an inserted bit is independent of movement of the jaws for accepting bits of different sizes, so that substantially the same degree of clamping movement is required of the clamping device to clamp the jaws on all inserted bits irrespective of the size of the bit.

The surface may be on a sliding member.

The track means may be a helical groove which is formed in the sliding member.

For jaw clamping purposes, the movable member may operate directly on the jaws, the track means being slots in which the jaws are constrained to slide, and the movable member being in the form of a wedge, cone or pyramid.

The two adjacent ends of the movable member and the sliding member may each be provided with teeth for enabling the movable member and the sliding member to engage each other and then to be pressed by the clamping device to cause the jaws to clamp on the inserted bit.

The clamping device may include a cam. The clamping device may also include a rotatable collar.

The jaws may be biased in one direction by a spring.

The movable member and the sliding member may be kept apart by a spring except when locating together in the process of clamping the jaws.

The chuck may be such that a compliant member is included between the clamping device and the jaws, which compliant member is strong enough to maintain the clamping force under conditions of strain and abrasion.

The chuck may be connected to a power tool, and any unclamping movement of the clamping device may operate a switch, key or clutch to cut-off a power supply.

By way of example, specific embodiments in accordance with the invention will be described with reference to the accompanying diagrammatic drawings in which:

Figure 1 is a section through a chuck;

Figure 2 is a perspective view of one of the jaw operated cylinders of the chuck of Figure 1;

Figure 3 is an exploded view of modified clamping means;

Figure 4 is a section through another chuck;

Figure 5 shows the jaws co-ordinating member of the chuck of Figure 4;

Figure 6 is a perspective view of one of the jaws of the chuck of Figure 4; and

Figure 7 is a section through the body and the surrounding sleeve of the chuck of Figure 4 taken along the line on 7—7.

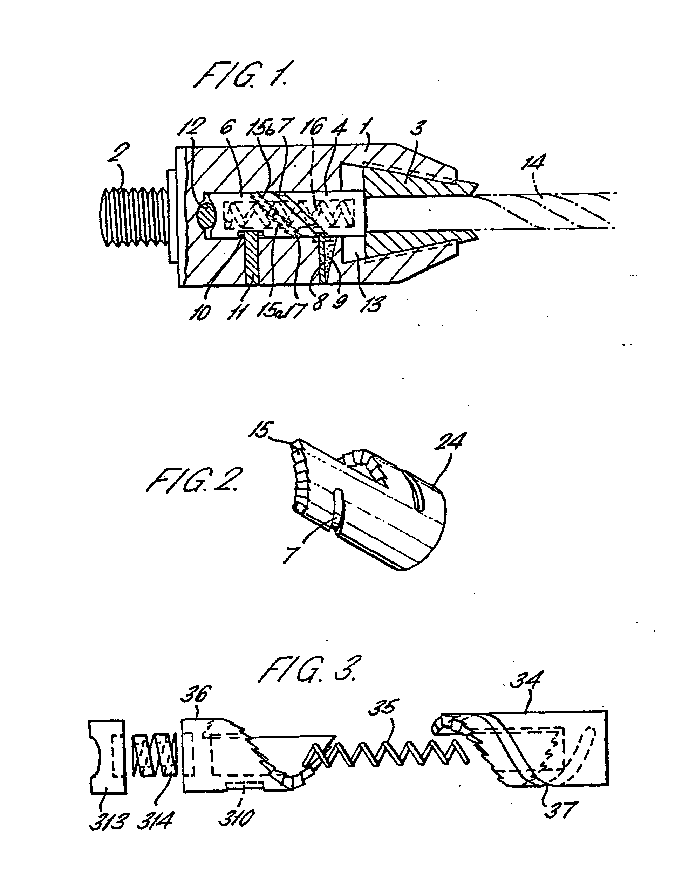

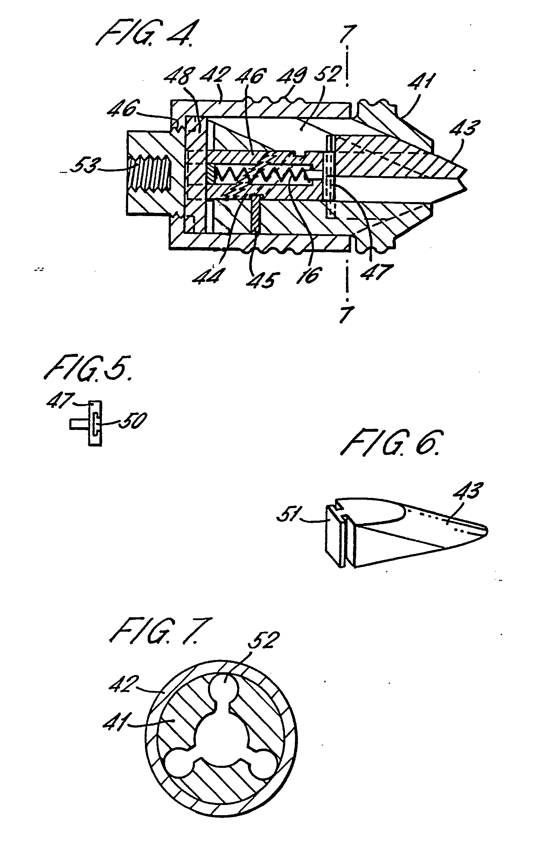

Figures 1 and 2 illustrate diagrammatically a chuck having a one-piece body 1 and at one end a threaded spiggot 2 forming a drive fixing for mounting the chuck in a power tool. The jaws 3, which may be any convenient number, are housed in an appropriate cavity 13 in the other end of the body in a manner which allows the jaws to slide longitudinally of the body to accommodate bits 14 having different diameter shanks. Inward movement of the jaws is effected by the bit itself, and the outer ends of the jaws define a lead-in to assist insertion of the bit. The chuck is thus self-adjusting.

Means for clamping the jaws 3 onto the inserted bit include two cylinders 4, 6 extending end to end along an axial bore within the chuck body 1. The adjacent ends of the cylinders 4, 6 have the same helical shape (only shown schematically in Figure 1) and teeth 15 which interengage when the cylinders are brought together to lock the cylinders against relative rotation. The cylinder 4 is also engaged by the inner ends of the jaws and a light spring 16 acts between the cylinders 4, 6 to apply pressure to the jaws via the cylinder 4 to close the jaws when the bit is removed.

The cylinder 4 has a helical groove 7 having the same angle and length as the helical cylinder ends. Within the groove fits a peg 8 which is fixed in the chuck body 1 but, in this embodiment, is provided with a compressible member 9 which allows the peg a slight movement towards the jaws. The provision of the peg and the groove will cause the cylinder 4 to turn during rearward movement of the cylinder.

The other cylinder 6 has a slot 10 engaged by a second peg 11 which allows the cylinder a small degree of longitudinal movement, but not to rotate.

In operation, if the jaws are pushed backwards by a bit, the cylinder 4 will be pushed inwardly, and will turn as it slides, whilst the cylinder 6 remains stationary. Hence the adjacent ends of the cylinders 4, 6 will turn past one another with a constant length of gap between them.

When the jaws are open enough for the bit shank to enter and pushing stops, there is still the same axial dimension of gap 17 between cylinders 4 and 6, whatever diameter of shank has been inserted.

The cylinder 6 is then moved towards the cylinder 4 by rotation of a lever operated cam 12 until the teeth 15 engage and prevent relative rotation of the cylinders. Further pressure applied to the end of the cylinder 6 remote from the jaws, for instance by the cam 12 causes a force to be applied by the cylinder 4 against the jaws to make them grip the bit in the normal manner. The peg 8 can move forward slightly to allow for any strain as the stress on the cylinder 4, jaws 3, body 1 and bit 14 increases.

Return movement of the cam releases the pressures, and peg 8 retracts cylinder 4 from any strain displacement and the bit 14 is freed for removal. The lever (not shown) for activating the cam extends parallel to the axis of the chuck and flush with the body 1 when this lever is in the clamping position.

Figure 3 shows a different clamping arrangement having an additional cylinder 313 and a strong spring 314, or other compressible element, between the cam 12 and the cylinders 36, 34 which are equivalent to the cylinders 6, 4 respectively of the embodiment of Figures 1 and 2. The provision of the strong spring 314 in addition to the light spring 35 achieves a desired predetermined force between the pressure applied by the cam and the pressure applied by the cylinder 34 on the jaws and also a more constantly correct gripping force on the bit, regardless of any abrasion of the bit shank during use which would otherwise require re-tightening of the chuck.

The embodiment of Figures 4 to 7 is similar in principle to the embodiment of Figures 1 and 2. The body 41 is again of one piece construction but in this case has a female drive fixing 53. The jaws 43 and cylinders 44, 46 are substantially the same as before (again the helical ends and groove are shown schematically for clarity) except that the cylinder 44 applies pressure to the jaws indirectly via a coordinating member 47. This member 47 (Figure 5) has three rebated grooves 50 for reception of equivalently shaped retaining elements 51 on the jaws 43 (Figure 6).

The cam is also replaced by a bar 48 which extends through a transverse hole in the chuck body and an aligned slot in the end of the cylinder 46 remote from the jaws 43. This bar prevents the cylinder 46 from rotating and thereby allows the previously described slot 10 and peg 11 to be omitted. Axial movement of the bar 48 both to move the cylinder 46 into locking engagement with the cylinder 44 and cause clamping of the inserted bit is effected by a sleeve 42 which is in screwthreaded engagement with the chuck body. To assist rotation of the sleeve, both the sleeve and the body are provided with knurling 49. Since the basic adjustment of the jaws is effected by the bit itself, it is possible to clamp the bit with a small amount of rotation of the sleeve 42, e.g. one turn or less.

Figure 7 shows the three milled slots 52 provided in the chuck body 41 for mounting the jaws 43. This particular arrangement allows the chuck body 41 to be produced by a single multi-operation automatic machine.

The invention is not restricted to the specific details of the embodiments described above. For example, the cylinders may be locked together against relative rotation by friction, in which case the cylinders need not have a separating gap when the clamping pressure is released.

Also the cylinders may be replaced by wedge-shaped members, the motion of which maintains the inclined surfaces parallel to one another and maintains a constant distance between them at some point or points, which distance may again be zero if desired.

In another embodiment, the same function is achieved by members, which may be the jaws themselves, which slide at an angle to the axis of the chuck body, and keep a constant dimension relative to a cone or pyramid which subsequently is caused to apply the clamping pressure to the jaws.

The locking together of the members may be achieved by interengaging teeth or protrusions, or friction, or magnetic force.

If desired unlocking movement of the jaw clamping mechanism may operate a switch, key or clutch to cut off the power source to the chuck. For example, loosening of the sleeve 42 could be arranged to depress a switch protruding from the adjacent end of the power tool body.

An advantage of each chuck described above is that it allows the bit changing time to be substantially reduced compared with conventional chucks, since the chuck is self-adjusting to the inserted bit, leaving just a quick clamping action to hold the bit tight.

Also, the tightening thread or cam is not directly vibrated by the work torque and thus the chuck should not loosen during use and thereby require re-tightening. Moreover, a predetermined spring pressure can readily be used if necessary to maintain the jaw grip on the bit even if strain or abrasion has otherwise loosened it.

Furthermore, whereas in each embodiment described above there is a one piece body, the construction may also be in the form of a two or more piece body. In this case the work-torque could be used for tightening the grip on the bit. This could be achieved, for instance, by the sleeve 42 in Figure 4 being in one piece with the drive fixing member 53, which together then screw on the remainder of the body 41, for the purpose of tightening the jaws. Such a construction would give the possibility of automatic jaw tightening.

## Claims

1. A chuck comprising a body (1, 41), jaws (3, 43) which are adjustable for enabling insertion of a bit (14), and clamping means for applying pressure to the jaws such that in use the jaws clamp against the inserted bit and retain it in the chuck, the chuck being characterised in that the jaw-clamping means comprises a movable member (6, 46), a clamping device (12, 42, 48) for moving the movable member (6, 46) towards the jaws (3, 43) and for causing a pressure to be applied to the jaws (3, 43) when the jaws (3, 43) are in their bit-clamping position, wherein the chuck includes track means (7) for causing a constant dimension (17) to be maintained between a surface (15b) which moves in the process of adjusting the jaws and a surface (15a) on the movable member (6, 46) so that movement of the clamping device (12, 42, 48) for clamping the jaws (3, 43) on an inserted bit (14) is independent of movement of the jaws (3, 43) for accepting bits of different sizes, so that substantially the same degree of clamping movement is required of the clamping device (12, 42, 48) to clamp the jaws (3, 43) on all inserted bits (14) irrespective of the size of the bit.

2. A chuck according to claim 1 characterised in that the surface (15b) is on a sliding member (4, 44).

3. A chuck according to claim 2 characterised in that the track means (7) is a helical groove (7) which is formed in the sliding member (4, 44).

4. A chuck according to claim 1 characterised in that for jaw clamping purposes the movable member (6, 46) operates directly on the jaws, the track means being slots (52) in which the jaws (43) are constrained to slide, and characterised in that the movable member (6, 46) is in the form of a wedge, cone or pyramid.

5. A chuck according to claim 2 or claim characterised in that the two adjacent ends (15a, 15b) of the movable member (6) and the sliding member are each provided with teeth for enabling the movable member (6) and the sliding member to engage each other and then to be pressed by the clamping device (12, 42, 48) to cause the jaws (3) to clamp on the inserted bit.

6. A chuck according to any one of the preceding claims characterised in that the clamping device (12) includes a cam (12).

7. A chuck according to any one of the preceding claims characterised in that the clamping device (42, 48) includes a rotatable collar (42).

8. A chuck according to any one of the preceding claims characterised in that the jaws (3, 43) are biased in one direction by a spring (16).

9. A chuck according to claim 2 or to claim 2 and any one of claims 3 to 8 characterised in that the movable member (6, 46) and the sliding member (4, 44) are kept apart by a spring (16) except when locating together in the process of clamping the jaws.

10. A chuck according to any one of the preceding claims characterised in that a compliant member (314, 48) is included between the clamping device (12, 42) and the jaws (3, 43), which compliant member (314, 48) is strong enough to maintain the clamping force under conditions of strain and abrasion.

11. A combination of a chuck according to any one of preceding claims and a power tool, and any unclamping movement of the clamping device (12) operates a switch, key or clutch to cut-off a power supply.

## Revendications

1. Mandrin autoréglable, comprenant un corps (1, 41), des mâchoires (3, 43) qui sont réglables pour permettre l'introduction d'une mèche ou autre outil (14), et des moyens de serrage pour l'application d'une pression aux mâchoires de manière que, lors de l'utilisation, ces mâchoires se serrent contre la mèche ou autre outil introduit et le retiennent dans le mandrin, celui-ci étant caractérisé en ce que les moyens de serrage des mâchoires comprennent un élément mobile (6, 46), un dispositif de serrage (12, 42, 48) pour assurer le déplacement de l'élément mobile (6, 46) vers les mâchoires (3, 43) et pour provoquer l'application d'une pression aux mâchoires (3, 43) lorsque celles-ci sont dans leur position de serrage d'une mèche ou autre outil, ce mandrin comprenant un moyen formant voie (7) permettant le maintien d'une dimension constante (17) entre une surface (15b) qui se déplace au cours du processus d'ajustage des mâchoires, et une surface (15a) prévue sur l'élément mobile (6, 46), de sorte que le déplacement du dispositif de serrage (12, 42, 48) pour le serrage des mâchoires (3, 43) sur une mèche ou autre outil introduit (14) est indépendant du mouvement des mâchoires (3, 43) pour accepter des mèches ou autres outils de différentes dimensions, de manière que pratiquement le même degré de mouvement de serrage est nécessaire de la part du dispositif de serrage (12, 42, 48) pour serrer les mâchoires (3, 43) sur toutes les mèches ou autres outils introduits (14) quelles que soient les dimensions de ces mèches ou autres outils.

2. Mandrin suivant la revendication 1, caractérisé en ce que la surface (15b) est prévue sur un élement coulissant (4, 44).

3. Mandrin suivant la revendication 2, caractérisé en ce que le moyen formant joint (7) est une rainure hélicoïdale (7) qui est formée dans l'élément coulissant (4, 44).

4. Mandrin suivant la revendication 1, caractérisé en ce que, pour les besoins de serrage des mâchoires, l'élément mobile (6, 46) opère directement sur les mâchoires, le moyen formant voie étant constitué par des fentes (52) dans lesquelles les mâchoires (43) sont contraintes à coulisser, et caractérisé en ce que l'élément mobile (6, 46) se présente sous la forme d'un coin, d'un cône ou d'une pyramide.

5. Mandrin suivant la revendication 2 ou la revendication 3, caractérisé en ce que les deux extrémités adjacentes (15a, 15b) de l'élément mobile (6) et de l'élément coulissant sont pourvues chacune de dents permettant à l'élément mobile (6) et à l'élément coulissant de coopérer l'une avec l'autre et d'être ensuite pressés par le dispositif de serrage (12, 42, 48) pour amener les mâchoires (3) à se serrer sur la mèche ou autre outil introduit.

6. Mandrin suivant l'une quelconque des revendications précédentes, caractérisé en ce que le dispositif de serrage (12) comprend une came (12).

7. Mandrin suivant l'une quelconque des revendications précédentes, caractérisé en ce que le dispositif de serrage (42, 48) comprend un collier rotatif (42).

8. Mandrin suivant l'une quelconque des revendications précédentes, caractérisé en ce que les mâchoires (3, 43) sont sollicitées dans un sens par un ressort (16).

9. Mandrin suivant la revendication 2 ou la revendication 3 et l'une quelconque des revendications 3 à 8, caractérisé en ce que l'élément mobile (6, 46) et l'élément coulissant (4, 44) sont maintenus écartés par un ressort (16), sauf lorsqu'ils sont rassemblés au cours du processus de serrage des mâchoires.

10. Mandrin suivant l'une quelconque des revendications précédentes, caractérisé en ce qu'un élément d'accommodement (314, 48) est prévu entre le dispositif de serrage (12, 42) et les mâchoires (3, 43), cet élément d'accommodement (314, 48) étant suffisamment robuste pour entretenir la force de serrage sous des conditions de fatigue et d'abrasion.

11. Combinaison d'un mandrin suivant l'une quelconque des revendications précédentes et d'un outil mécanique, dans laquelle tout mouvement de desserrage quelconque du dispositif de serrage (12) fait fonctionner un interrupteur, une clé ou un embrayage pour couper l'alimentation d'énergie.

**Patentansprüche**

1. Selbsteinstellendes Spannfutter mit einem Gehäuse (1, 41), Backen (3, 43), die zum Einsetzen eines Bohreinsatzes (14) verstellbar sind, und einer Klemmvorrichtung zum Ausüben von Druck auf die Backen, so daß im Betrieb die Backen den eingesetzten Bohreinsatz einklemmen und ihn im Spannfutter festhalten, dadurch gekennzeichnet, daß die Backen-Klemmvorrichtung ein bewegliches Element (6, 46) und eine Klemmeinrichtung (12, 42, 48) zum Bewegen des beweglichen Elements (6, 46) in Richtung der Backen (3, 43) und zum Druckausüben auf die Backen (3, 43) aufweist, wenn die Backen (3, 43) in ihrer Bohreinsatz-Klemmposition sind, wobei das Spannfutter eine Führungseinrichtung (7) aufwesit zum Aufrechterhalten einer konstanten Abmessung (17) zwischen einer Fläche (15b), die sich beim Einstellvorgang der Backen bewegt, und einer Fläche (15a) auf dem beweglichen Element (6, 46), so daß eine Bewegung der Klemmeinrichtung (12, 42, 48) zum Klemmen der Backen (3, 43) auf einen eingesetzten Bohreinsatz (14) unabhängig ist von einer Bewegung der Backen (3, 43) zu Aufnehmen von Bohreinsätzen mit unterschiedlichen Größen, so daß zum Klemmen der Backen (3, 43) auf alle eingesetzten Bohreinsätze (14), unabhängig von der Größe des Bohreinsatzes im wesentlichen eine gleichgroße Klemmbewegung der Klemmeinrichtung (12, 42, 48) notwendig ist.

2. Spannfutter nach Anspruch 1, dadurch gekennzeichnet, daß die Fläche (15b) auf einem Gleitelement (4, 44) ist.

3. Spannfutter nach Anspruch 2, dadurch gekennzeichnet, daß die Führungseinrichtung (7) eine Schrauben-Nut (7) ist, die in dem Gleitelement (4, 44) ausgebildet ist.

4. Spannfutter nach Anspruch 1, dadurch gekennzeichnet, daß zum Klemmen der Backen das bewegliche Element (6, 46) direkt auf die Backen wirkt, daß als Führungseinrichtung Schlitze (52) vorgesehen sind, in denen die Backen (43) zum Gleiten eingezwängt sind, und daß das bewegliche Element (6, 46) die Form eines Keils, eines Konus oder einer Pyramide hat.

5. Spannfutter nach Anspruch 2 oder Anspruch 3, dadurch gekennzeichnet, daß die zwei benachbarten Enden (15a, 15b) des beweglichen Elements (6) und des Gleitelements jeweils Zähne aufweisen, um zu ermöglichen, daß das bewegliche Element (6) und das Gleitelement miteinander in Eingriff kommen und dann durch die Klemmeinrichtung (12, 42, 48) zusammengepreßt werden, so daß die Backen (3) an den eingesetzten Bohreinsatz einklemmen.

6. Spannfutter nach einem der vorhergehenden Ansprüche, dadurch gekennzeichnet, daß die Klemmeinrichtung (12) einen Nocken (12) aufweist.

7. Spannfutter nach einem der vorhergehenden Ansprüche, dadurch gekennzeichnet, daß die Klemmeinrichtung (42, 48) eine drehbare Manschette (42) aufweist.

8. Spannfutter nach einem der vorhergehenden Ansprüche, dadurch gekennzeichnet, daß die Bakken (3, 43) durch eine Feder (16) in eine Richtung vorgespannt sind.

9. Spannfutter nach Anspruch 2 oder Anspruch 2 und einem der Ansprüche 3 bis 8, dadurch gekennzeichnet, daß das bewegliche Element (6, 46) und das Gleitelement (4, 44) durch eine Feder (16) auseinandergehalten werden, ausgenommen dann, wenn sie beim Klemmvorgang der Backen zusammengebracht werden.

10. Spannfutter nach einem der vorhergehenden Ansprüche, dadurch gekennzeichnet, daß ein Federelement (314, 48) zwischen der Klemmeinrichtung (12, 42) und den Backen (3, 43) eingefügt ist, wobei das Federelement (314, 48) stark genug ist, die Klemmkraft unter Bedingungen wie Beanspruchung und Verschließ aufrechtzuerhalten.

11. Eine Kombination eines Spannfutters nach einem der vorhergehenden Ansprüche und eines Kraftwerkzeugs, wobei jede Entriegelungsbewegung der Klemmeinrichtung (12) einen Schalter, Schlüssel oder eine Klaue zum Abschalten der Leistungsversorgung betätigt.

FIG. 1.

FIG. 2.

FIG. 3.

FIG. 4.

FIG. 5.

FIG. 6.

FIG. 7.